# EUROPÄISCHE PATENTSCHRIFT

(11) **EP 1 502 681 B1**
(45) Veröffentlichungstag und Bekanntmachung des Hinweises auf die Patenterteilung: **26.11.2008**
(21) Anmeldenummer: 04002265.9
(22) Anmeldetag: 03.02.2004
(51) Int. Cl.: B23B 5/16, B23K 11/30, B21D 22/14

(54) **Vorrichtung zum Bearbeiten von Werkstücken mit Rotationsflächen**
Device for working piece with revolution surfaces
Dispositif avec des surface de révolution

(30) Priorität: 31.07.2003 DE 10334924
(43) Veröffentlichungstag der Anmeldung: 02.02.2005
(73) Patentinhaber: Bräuer, Andreas, 09456 Annaberg-Buchholz (DE)
(72) Erfinder: Bräuer, Andreas, 09456 Annaberg-Buchholz (DE)
(74) Vertreter: Köhler, Tobias

(56) Entgegenhaltungen:
- DE-A- 10 056 196
- DE-U- 20 208 350
- US-A- 4 610 153

## Beschreibung

Die Erfindung betrifft eine Vorrichtung für die Metallbearbeitung, speziell für rotationssymmetrische metallische Werkstücke.

Derartige Vorrichtungen werden insbesondere für das Nacharbeiten von Elektrodenkappen in der Widerstandsschweißtechnik eingesetzt, doch ist die Anwendung darauf nicht beschränkt. Die folgenden Ausführungen nehmen auf dieses Einsatzgebiet schwerpunktmäßig Bezug.

Elektroden für die Widerstandsschweißtechnik, die in Roboter- oder Handzangen geführt werden, müssen zur Gewährleistung der Festigkeit und zur Reproduzierbarkeit der Schweißpunkte in Abhängigkeit vom Verschleiß an den Kappen nachbearbeitet werden. Dieser Bearbeitungsvorgang darf auf Grund der Einbindung in automatisierte Abläufe nur geringe Zeit erfordern, er soll die ursprüngliche Form der Kappe weitgehend wieder erzeugen und zudem durch einen möglichst geringen Materialabtrag eine lange Einsatzsdauer der Kappe gewährleisten.

Dafür werden bekannterweise Vorrichtungen eingesetzt, die in einer angetriebenen Fräseraufnahme eine Schneidplatte enthalten (siehe z.B. DE-U-20 208 350). Ein Nachteil derartiger Vorrichtungen ist es, dass mit jeder Bearbeitung Material abgetragen wird, so dass die Kappe an Volumen verliert und ihre Lebensdauer eingeschränkt ist. Zudem müssen die entstandenen Späne zuverlässig nach außen abgeführt werden, so dass eine besondere konstruktive Ausgestaltung der Fräseraufnahme und eine Zusatzeinrichtung zum Ableiten der Späne erforderlich sind.

Es ist weiterhin bekannt (EP 1 005 942 B1), mindestens drei Satelliten, deren Achsen parallel zur Achse des Bearbeitungskopfes ausgerichtet sind, als Stauchelemente zu verwenden. Mit einer derartigen Anordnung entsteht jedoch zwangsläufig eine durch die Satellitenumfänge gebildete zentrale Zone, die dazu führt, dass die Kappe im Bereich der Spitze unbearbeitet bleibt. Dieser Mangel kann nur durch den Einsatz eines zweiten Bearbeitungskopfes behoben werden, der den Bereich der Kappenspitze in einem zusätzlichem Arbeitsschritt nacharbeitet.

Nach der Patentschrift DE 101 25 481 C1 ist es bekannt, in einem Formkopf mehrere Formwalzen zu integrieren, von denen eine über die Mitte des Formkopfes hinaus steht, wobei die Konturen der Formwalzen in ihrem Arbeitsbereich der angestrebten Kappengeometrie entsprechen. Mit einem derartigen Formkopf wird zwar eine spanlose Nachbearbeitung der Kappe einschließlich ihrer Spitze erreicht, doch ist die Nachformung gegenüber einem spanenden Abtrag begrenzt. Zudem erfordert diese Art der Bearbeitung der Kappen mehr Zeit als das Nachfräsen.

Aufgabe der Erfindung ist es, eine Vorrichtung zum Bearbeiten von Werkstücken mit Rotationsflächen, insbesondere für Elektrodenkappen, zu entwickeln, durch deren Einsatz der Spanabtrag gegenüber bekannten Fräsanlagen reduziert und die Bearbeitungszeit gegenüber der spanlosen Nachformung verkürzt wird.

Erfindungsgemäß wird die Aufgabe dadurch gelöst, dass die Vorrichtung mit einem pneumatisch oder elektrisch angetriebenen Bearbeitungskopf eine in einer Aussparung im Bearbeitungskopf gelagerte Schneidplatte und mindestens eine Formwalze mit im Bearbeitungskopf integrierter Lagerung aufweist, wobei die Konturen der Schneidplatte und der Formwalzen in ihrem Arbeitsbereich der angestrebten Werkstückgeometrie entsprechen. Mit einem derartigen Bearbeitungskopf wird ein kombiniertes Bearbeiten rotationssymmetrischer Teile ermöglicht, wobei ein Schneid- und ein Umformvorgang gleichzeitig, aber an örtlich getrennten Stellen im Bearbeitungskopf ausgeführt werden. Mit der erfindungsgemäßen Vorrichtung wird immer ein Teil der Werkstückfläche spanlos nachgeformt und ein anderer Teil geschnitten bzw. gefräst.

Aus den Vorzugsvarianten ist zu entnehmen, dass die Anteile der zu schneidenden bzw. der zu formenden Bereiche je nach Anordnung und Ausbildung der Formwalzen und der Schneidplatte bzw. Formmesser veränderlich sind.

Eine Ausgestaltung besteht darin, im Bearbeitungskopf neben der Schneidplatte zwei Formwalzen zu integrieren und diese drei Elemente um je 120 Grad versetzt gegeneinander anzuordnen.

Um auch den Bereich der eigentlichen Spitze mit zu erfassen, besteht eine weitere Ausgestaltung darin, die Schneidplatte als Komplettmesser auszuführen, das über die Mitte des Bearbeitungskopfes hinaus ragt und so die Spitze spanend bearbeitet, während die Formwalze bzw. die Formwalzen so ausgeführt sind, dass sie nur die Flanken spanlos nachformen.

Der gleiche Erfolg wird auch dadurch erreicht, dass die Schneidplatte als Flankenmesser ausgebildet ist und eine Formwalze über die Mitte des Bearbeitungskopfes hinaus steht, so dass die Spitze spanlos nachgeformt wird, und eventuell vorhandene weitere Formwalzen ebenfalls nur auf den Flankenbereich des Werkstückes einwirken.

Die Vorrichtung gestattet weiterhin durch entsprechende Ausgestaltung von Schneidplatte und Formwalzen eine gleichzeitige paarweise Bearbeitung gegenüber stehender oder auch gering gegeneinander gekippter Werkstücke.

Aufbau und Wirkungsweise der Vorrichtung werden im folgenden beispielhaft für den Einsatz als Kappenbearbeitungsgerät beschrieben.
Es zeigen:
- Figur 1: eine perspektivische Ansicht eines Bearbeitungskopfes mit einem Komplettmesser
- Figur 2: eine perspektivische Ansicht eines Bearbeitungskopfes mit einem Flankenmesser und zwei unterschiedlich ausgebildeten Formwalzen

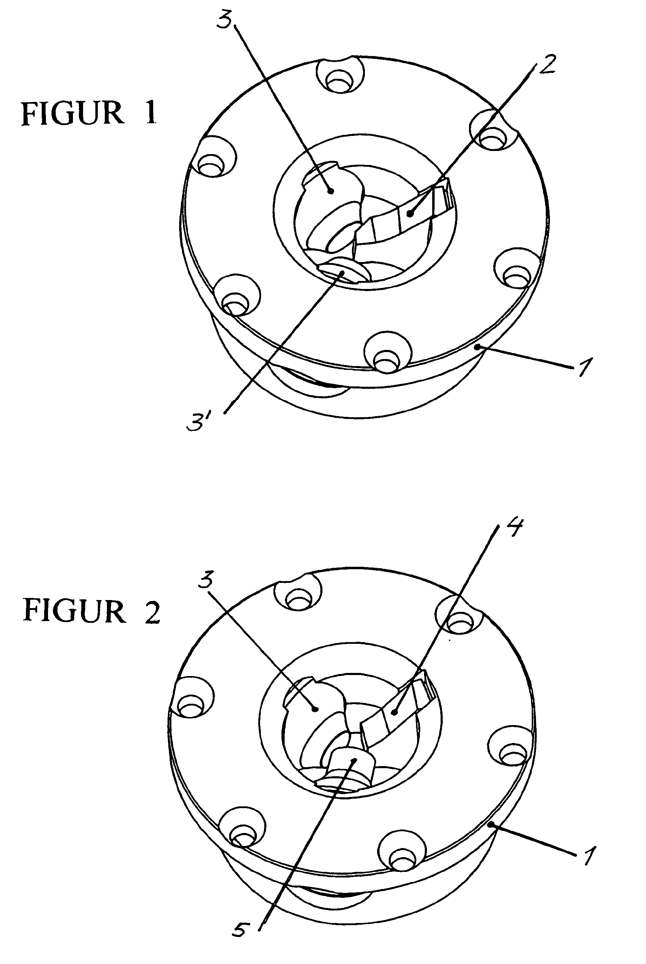

Der in bekannter Weise elektrisch oder pneumatisch angetriebene Bearbeitungskopf 1 enthält die in einer Aussparung gelagerte Schneidplatte 2, die als Komplettmesser ausgeführt ist und zwei gleich gestaltete Formwalzen 3 und 3', die lediglich den Flankenbereich der Elektrodenkappe nachformen. Das Komplettmesser führt über die Mitte des Bearbeitungskopfes 1 hinaus und bearbeitet spanend auch die Kappenspitze nach. Zur Begrenzung der axialen Verschiebung der Formwalzen dient je ein Axiallager, das jeweils aus der hier nicht sichtbaren Druckkugel mit einer anliegenden Druckscheibe besteht, und das über Schrauben gespannt wird. Die Konturen der Schneidplatte 2 und der Formwalzen 3 und 3' sind so ausgeführt, dass ein paarweises Bearbeiten von Elektrodenkappen möglich ist. Die Elektroden werden in den Bearbeitungskopf - gemäß Figur 1- von oben und unten eingefahren und fixiert. Die kombinierte Nacharbeitung der Kappen dauert nur wenige Sekunden. Der Spanabtrag ist gering, da ein Teil der Nachformung spanlos durch die Formwalzen ausgeführt wird. Die Formwalzen selbst sind nicht angetrieben, sondern lediglich drehbar im Bearbeitungskopf gelagert.

Die Vorrichtung nach Figur 2 zeigt einen Bearbeitungskopf 1, der eine als Flankenmesser 4 ausgebildete Schneidplatte und zwei unterschiedlich gestaltete Formwalzen 3 und 5 enthält. Die Formwalze 5 steht über die Mitte des Bearbeitungskopfes hinaus und formt auch die Spitze der Kappen spanlos nach. Die zweite Formwalze 3 ist kürzer ausgeführt und sichert in Verbindung mit dem ebenfalls nur im Flankenbereich angreifendem Messer 4 die Nachformung der Kappen im Flankenbereich. Für die Lagerung der Formwalzen und das paarweise gleichzeitige Nachformen von Elektrodenkappen treffen die zu Figur 1 gemachten Ausführungen zu.

Die erfindungsgemäße Vorrichtung gestattet ein wirtschaftliches und formgetreues Nacharbeiten der Urform von Werkstücken mit Rotationsflächen. Die kombinierte Bearbeitung durch ein gleichzeitig ablaufendes Formschneiden und Umformen an örtlich getrennten Stellen gewährleistet einen stabilen Betrieb der Vorrichtung mit einem guten Rundlauf und führt zu einem sehr guten Ergebnis hinsichtlich Nacharbeitszeit und Spanabtrag, so dass gegenüber dem Fräsen bei vergleichbar kurzen Bearbeitungszeiten eine längere Einsatzdauer der Kappen auf Grund des reduzierten Materialabtrages erreicht wird.

Die Vorrichtung ist damit speziell geeignet, Elektrodenkappen einzeln oder paarweise nachzuformen und kann als kombinierter Bearbeitungskopf in üblichen Kappenfräsanlagen eingebaut bzw. als Nachrüstsatz eingesetzt werden.

## Patentansprüche

1. Vorrichtung zum Bearbeiten von Werkstücken mit Rotationsflächen, vorzugsweise von Elektrodenkappen für die Widerstandsschweißtechnik, mit einem pneumatisch oder elektrisch angetriebenen Bearbeitungskopf ( 1 ), **dadurch gekennzeichnet, dass** im Bearbeitungskopf ( 1 ) eine Schneidplatte ( 2 ) in einer Aussparung gelagert ist und dass er mindestens eine Formwalze ( 3, 3', 5 ) mit im Bearbeitungskopf ( 1 ) integrierter Lagerung aufweist, wobei die Konturen der Schneidplatte ( 2 ) und der Formwalzen ( 3, 3', 5) in ihrem Arbeitsbereich der angestrebten Werkstückgeometrie entsprechen.

2. Vorrichtung zum Bearbeiten nach Anspruch 1, **dadurch gekennzeichnet, dass** der Bearbeitungskopf ( 1 ) zwei Formwalzen ( 3, 3' ) enthält, die mit der Schneidplatte ( 2 ) um je ca. 120 Grad gegeneinander versetzt sind.

3. Vorrichtung zum Bearbeiten nach Anspruch 1 oder 2, **dadurch gekennzeichnet, dass** die Schneidplatte ( 2 ) über die Mitte des Bearbeitungskopfes ( 1 ) hinaus stehend als Komplettmesser ausgebildet ist und die Formwalzen ( 3 , 3' ) lediglich die Flanken des Werkstückes bearbeiten.

4. Vorrichtung zum Bearbeiten nach Anspruch 2, **dadurch gekennzeichnet, dass** die Schneidplatte als Flankenmesser ( 4 ) ausgebildet ist, eine Formwalze ( 5 ) über die Mitte des Bearbeitungskopfes ( 1 ) hinaus geht und die kürzere Formwalze ( 3 ) lediglich die Flanken des Werkstückes bearbeitet.

5. Vorrichtung zum Bearbeiten nach Anspruch 1, **dadurch gekennzeichnet, dass** sie durch die Gestaltung der Schneidplatte ( 2, 4 ) und der Formwalzen ( 3, 3', 5 ) eine paarweise Bearbeitung gegenüber liegender oder auch gering gegeneinander gekippter Werkstücke gleichzeitig ermöglicht.

## Claims

1. A device for the machining of work pieces with surfaces of revolution, preferably of electrode caps for resistance welding, including a pneumatically or electrically operated machining head (1) wherein a cutting die (2) is supported in a recess of the machining head (1), the latter being provided with at least one forming roll (3, 3', 5) with a bearing system integrated in the machining head (1), the contours of both the cutting die (2) and forming rolls (3, 3', 5) corresponding to the required work piece geometry within their working range.

2. A device for machining operations according to Claim 1 wherein the machining head (1) includes two forming rolls (3, 3') each of which is offset to the cutting die (2) by 120 degrees.

3. A device for machining operations according to Claim 1 or 2 wherein the cutting die (2) is designed as a complete knife protruding over the central point of the machining head (1) and the forming rolls (3, 3') is only used for machining the work piece sides.

4. A device for machining operations according to Claim 2 wherein the cutting die (2) is designed as a flange knife (4), a forming roll (5) is protruding over the central point of the machining head (1) and the shorter forming roll (3) is only used for machining the work piece sides.

5. A device for machining operations according to Claim 1 wherein the simultaneous machining of a pair of work pieces, which are opposed to each other or slightly inclined towards each other is facilitated by the design of both the cutting die (2, 4) and the forming rolls (3, 3', 5).

## Revendications

1. Dispositif pour usiner des pièces à façonner avec des surfaces de rotation, de préférence de capuchons d'électrodes pour la technique de soudage par résistance, avec une tête d'usinage pneumatique ou électrique (1), **caractérisé en ce qu'**une plaque de coupe (2) est logée dans une ouverture à l'intérieur de la tête d'usinage (1) et **en ce que** ladite tête d'usinage présente au moins un rouleau de moulage (3, 3', 5) avec un palier intégré dans la tête d'usinage (1) ; les contours de la plaque de coupe (2) et des rouleaux de moulage (3, 3', 5) correspondant à la géométrie aspirée de la pièce à façonner dans leur zone de travail.

2. Dispositif pour usiner selon la revendication 1, **caractérisé en ce que** la tête d'usinage (1) est équipée de deux rouleaux de moulage (3, 3') qui avec la plaque de coupe (2) sont excentrés de 120 degrés chacun.

3. Dispositif pour usiner selon la revendication 1 ou 2, **caractérisé en ce que** la plaque de coupe (2) dépassant du milieu de la tête d'usinage (1) est conçue comme une lame complète et **en ce que** les rouleaux de moulage (3, 3') travaillent uniquement les flancs de la pièce à façonner.

4. Dispositif pour usiner selon la revendication 2, **caractérisé en ce que** la plaque de coupe (2) est conçue comme une lame de flanc (4), **en ce qu'**un rouleau de moulage (5) dépasse le milieu de la tête d'usinage (1) et **en ce que** le rouleau de moulage le plus court (3) travaille uniquement les flancs de la pièce à façonner.

5. Dispositif pour usiner selon la revendication 1, **caractérisé en ce qu'**elle permet un usinage par paire et parallèle des pièces à façonner se trouvant en face l'une de l'autre ou également inclinées l'une contre l'autre par la conception de la plaque de coupe (2) et des rouleaux de moulage (3, 3', 5).
